# EUROPEAN PATENT SPECIFICATION

(11) **EP 2 509 449 B1**
(45) Date of publication and mention of the grant of the patent: **14.08.2013**
(21) Application number: 10785426.7
(22) Date of filing: 02.12.2010
(51) Int. Cl.: A23L 1/0522, A23L 1/40, A23L 1/22, A23L 1/30, A23L 1/10, A23L 1/237, A23L 1/00

(54) **GRANULAR SAVOURY FOOD CONCENTRATE**
KÖRNIGES, PIKANTES LEBENSMITTELKONZENTRAT
CONCENTRÉ ALIMENTAIRE GOÛTEUX GRANULAIRE

(30) Priority: 11.12.2009 EP 09178781
(43) Date of publication of application: 17.10.2012
(73) Proprietor: Unilever NV, 3013 AL Rotterdam (NL); Unilever PLC, London, Greater London EC4Y 0DY (GB)
(72) Inventor: BUECKER, Bernd, 74074 Heilbronn (DE); MAYR, Andreas, 74074 Heilbronn (DE); STEINMETZ, Jean-Marie, 74074 Heilbronn (DE)
(74) Representative: Reijns, Tiemen Geert Pieter
(86) International application number: PCT/EP2010/068725
(87) International publication number: WO 2011/069885

(56) References cited:
- WO-A1-98/20756
- WO-A1-2006/045404
- WO-A1-2008/086918
- WO-A1-2009/127992
- GB-A- 1 561 202
- US-A- 5 770 251
- US-A- 6 007 851

## Description

The present invention relates to a granular savoury food concentrate and a food product comprising the same. It further relates to a process to prepare said granular savoury food concentrate. It further relates to the use of said granular savoury food concentrate to prepare a bouillon, soup, sauce or gravy or for the use as a seasoning.

### Background of the invention

Many examples of savoury granular food concentrates are known from the prior art, to be used as a concentrate to prepare for example a bouillon or a soup. Granular savoury food concentrates provide the advantage over food concentrates with a unit dose format, e.g. in the form of a cube or a tablet, by their convenient dosability from the packaging by the consumer. Two basic production methods can be discriminated to prepare granular savoury food concentrates. In a first granulation method fat is used as a binding agent for the ingredients of the granules. This technique is preferably applied to prepare granules that are used to form a creamy consistency after dilution in water. The inherent presence of fat may however be considered as undesired by some consumers. A second method to produce granular savoury food concentrates, called wet-granulation, uses water to bind the ingredients, in a process comprising partial dilution in water and re-crystallization of ingredients. This method is more suitable to produce granules used for seasoning applications. Wet-granulation further overcomes most of the objections that may result from the use of fat in the granulation process, such as for example, possible oxidation during storage, a fatty appearance of the granule or fat-staining of the packaging.

Granular savoury food concentrates are conventionally produced using monosodium glutamate as an ingredient, hereinafter called MSG. MSG contributes to the taste of the final food product to be consumed, for example a bouillon, soup or a gravy. The savoury taste it provides is sometimes referred to as the fifth taste, besides the well-known tastes of sweet, salt, bitter and sour. This savoury taste is also referred to in some literature as umami. MSG is a crystalline product and may be present in conventional granular savoury food concentrates in an amount of for example 10 to 45 wt%.

Nowadays, it is believed by some consumers that MSG is not contributing to a healthy diet. For example, MSG contributes to the sodium content of a resulting food product, which is connected to some negative health effects. Reduction of MSG in savoury food concentrates therefore is a valuable goal in the development of more healthy food products.

WO 2006/045404 discloses a granular food concentrate comprising, based on the dry weight of the granular food concentrate, 70-99.95% of a matrix material and 0.05-30% of microbial capsules comprising a flavour imparting substance and/or colour imparting substance and/or vitamin, wherein at least part of the matrix comprises one or more of salt, sugar, starch, maltodextrin, monosodium glutamate, fat, herbs, spices, fruit- or vegetable powder or particulates and wherein the microbial capsules are yeast cells. WO 2006/045404 also discloses a process of manufacturing a granular cooking aid, which process comprises the steps of: providing microbial capsules comprising an active, mixing said microbial capsules with a matrix material comprising one or more of salt, sugar, starch, maltodextrin, monosodium glutamate, and fat and/or moisture subjecting said mixture of matrix material and microbial capsules to a granulation, agglomeration or extruding step or other process for preparing a granular material.

One of the ways to provide a savoury taste in granular savoury food concentrates is to replace crystalline MSG by yeast extract. Yeast extract is a fine powder and is considered a natural ingredient providing a taste recognized as "savoury". However, to provide the desired taste effect, yeast extract should be present in relatively high amounts in a savoury food concentrate.

However, it was observed that relatively high amounts of yeast extract in the granulation mixture result in blockage of the granulation machinery because of a very high resistance. For this reason, up to now the content of yeast extract in conventional granulation mixtures may be limited to amounts lower than about 1 wt.%. A serious problem observed was how to provide a savoury food concentrate in granular form, with a relatively low amount of fat and a reduced amount of MSG, preferably wherein MSG is absent, which concentrate still provided a sufficient savoury taste in the final food product to be consumed after dilution of the concentrate.

### Summary of the invention

Surprisingly, this problem was solved by a granular savoury food concentrate comprising, based on the dry weight of the granular savoury food concentrate:
- from 10 wt.% to 65 wt.% of salt,
- from 1 wt.% to 20 wt.% of yeast extract,
- from 10 wt.% to 50 wt.% of a binder selected from the group consisting of flour, starch and a mixture thereof.

The invention further relates to a process to produce a granular savoury food concentrate, comprising the steps of;
a) preparing a mixture comprising, based on the dry weight of the granular savoury food concentrate:
   - from 10 wt.% to 65 wt.% of salt
   - from 10 wt.% to 50 wt.% of a binder selected from the group consisting of flour, starch and a mixture thereof,
b) mixing water into the mixture resulting from step a),
c) mixing from 1 wt% to 20 wt% of yeast extract into the mixture resulting from step a) or from step b), based on the dry weight of the granular savoury food concentrate,
d) shaping the resulting mixture comprising salt, binder, yeast extract and water to granules by wet-granulation,
e) drying the granules resulting from step d) to form a granular savoury food concentrate.

In a further aspect, the invention relates to a food product comprising the food concentrate of the invention.

In a further aspect, the invention relates to the use of a food concentrate of the invention for the preparation of at least one of the group consisting of: a bouillon, soup, sauce, and a gravy or for the use as a seasoning.

### Detailed description of the invention

All percentages are weight/weight percentages of the total composition unless otherwise indicated. Where the term "comprising" is used in the specification or claims, it is not intended to exclude any terms, steps or features not specifically recited.

The present invention relates to a granular savoury food concentrate. In the present context, "granular" refers to a particle with the appearance of a granule and has been produced by the process of granulation. It does not refer to a powder. The particle size of the granular food concentrate is preferably between 1 mm and 2.5 mm, more preferably of between 1.4 and 1.7 mm. The diameter should be interpreted as the longest diameter through the particle. Preferably more than 50wt%, more preferably more than 80wt %, even more preferably more than 90wt%, even more preferably more than 95wt%, most preferably more than 98wt% of the granular food concentrate according to the invention has a particle size of from 18 to 8 mesh, more preferably of from 14 to 12 mesh.

Preferably from 50 to 100wt%, more preferably of from 75 to 95wt%, most preferably of from 80 to 90 wt% of the granular food concentrate according to the invention has a particle size of from 18 to 8 mesh, more preferably of from 14 to 12 mesh. Mesh is intended to mean United States mesh.

The term "savoury" should be interpreted as not tasting sweet. Savoury food concentrates are for example concentrates to prepare a bouillon, soup, sauce or a gravy. Seasoning granules to season a dish or a meal during or after cooking are also savoury food products. The sugar content preferably is relatively low. To this end, the present invention preferably relates to a granular savoury food product, further comprising from 1 wt% to 15 wt.% of sugar. The presence of some sugar may be preferred, to contribute to a firmer texture of the granule. Preferably the sugar content is of between 8 wt% and 12 wt.%. Any convential sugar may be used. The sugar may be one of the group consisting of sucrose, fructose, glucose, maltodextrin, glucose sirup, lactose, maltose and mixtures thereof. Preferably, the sugar is in the form of icing sugar or powdered sugar. This contributes to an improved texture and rigidity of the granular savoury food concentrate.

Preferably, the savoury food concentrate is a granulated savoury food concentrate. This is intended to mean a savoury food concentrate produced by the process of granulation. A person skilled in the art would recognize a granulated savoury food concentrate. A granulated (e.g. extruded) particleis more dense than an agglomerated particle, while an agglomerated particle is more loose in shape and often more round. Agglomerates are further more irregular in shape, while extrudates are more regular shaped.

The granules of the present invention are preferably hygroscopic. A hygroscopic character contributes to the dissolution in an aqueous food product by the consumer, like a dish. Preferably, the product of the invention is not in a glassy state, i.e. the product having a single glass transition temperature. It rather may show a heterogeneous composition. It could be that some of the ingredients of the granular product transformed to a glassy state during production, but preferably not all of them have and the granular food concentrate is preferably not in a glassy state. In the present invention a glassy state is not desired, as providing a glassy state requires a complicated control of process parameters (temperatures and pressure) and tends to reduce dissolution time of the resulting product. Therefore, preferably, the total granular food concentrate is not in a glassy state.

The salt content of the savoury food concentrate of the invention is between 10 and 65 wt.%. Preferably the salt content is between 20 wt% and 50 wt%, most preferably between 28 wt.% and 45 wt.%. The relatively high salt content illustrates the character of a concentrate and contributes to the savoury character of the granules of the invention and determines the taste of the final food product which results of dilution of the savoury food concentrate in an aquous solution or after sprinkling it on a meal or a dish when used as a seasoning. Preferably, the salt is common salt, comprising NaCl.

As indicated above, the savoury character of the savoury food concentrate is further determined by an umami-like taste. Conventionally MSG is added to the concentrate to contribute to the umami taste. The aim of the present invention is to reduce the amount of MSG, and preferably, to prepare a savoury food concentrate without the use of any MSG. To this end, preferably, the present invention relates to a savoury food concentrate further comprising less than 40 wt%, more preferably less than 20 wt%, even more preferably less than 10 wt%, even more preferably less than 5 wt% of MSG and can comprise from 0 wt.% to 40 %wt of MSG (which includes the possibility of the absence of MSG), more preferably from 0.05 wt.% to 20 wt.% MSG, even more preferably, from 0.2 wt.% to 10 wt.%, even more preferably form 1 wt.% to 5 wt% of MSG. Most preferably, the savoury food concentrate is substantially free from MSG, more preferably does not contain MSG. In the present invention, MSG should be interpreted as MSG added as such, for example in crystalline form, and not present as part of another ingredient, such as for example yeast extract.

The total amount of crystalline ingredients, such as for example salt, MSG and sugar, is preferably of from 10 to 70wt%, preferably of from 25 to 65wt%, more preferably of from 35 to 60wt%, most preferably of from 45 to 55 wt%

The savoury food concentrate of the present invention comprises a relatively high amount of yeast extract, in an amount of from 1 wt.% to 20 wt.%. Higher amounts may result in a too high resistance in the granulation machinery. Preferably, the amount of yeast extract is from 5 wt.% to 18 wt%. In this range, the present invention showed optimal results in terms of process efficiency and granular texture. Most preferably, the savoury food concentrate comprises from 8 wt.% to 13 wt% of yeast extract. This is the optimal amount for reasons of taste and product quality. Yeast extract in the context of the present invention is preferably yeast extract in powdery form. Yeast extract is a product which is well known to the person skilled in the art. It is the common name for various forms of processed yeast products, which can be made by extracting the cell contents and usually removing the cell walls.

The savoury food concentrate of the present invention comprises from 10 wt.% to 50 wt.% of one the group consisting of flour, starch and mixtures thereof. The use of this specific amount of flour or starch enabled the granulation machinery to produce granules of the present invention. Higher amounts affected the savoury character and the concentrated form of the savoury food concentrate of the invention, as this high amount of starch would be at the cost of other ingredients like salt and yeast extract. Preferably, the amount of flour or starch is between 15 wt.% and 30 wt.%, most preferably between 20 wt.% and 27 %wt. The flour as used in the present invention is preferably one of the group consisting of potato flour, corn flour, rice flour, waxy corn flour, waxy rice flour, wheat flour and mixtures thereof. The starch as used in the present invention is preferably one of the group consisting of potato starch, corn starch, tapioca starch, pea starch, rice starch and mixtures thereof. It can be either native starch or modified starch. Even more preferably, the starch is native starch or physically modified starch. Most preferably, the starch is native starch. Preferably, starch is not chemically modified starch, as chemically modified starch is not desired in the present invention. Preferably, the invention relates to a savoury food concentrate wherein starch is used and wherein this starch is potato starch, corn starch or tapioca starch. Most preferably the starch is potato starch. Maltodextrin levels are preferably low. Preferably maltodextrin levels are lower than 10 wt%, more preferably lower than 5 wt%, even more preferably, lower than 3 wt%, and the level can be between 0wt% and 10 wt% (including the possibility of the absence of maltodextrin), more preferably of between 0.5 wt% and 5 wt%, even more preferably of between 1 wt% and 3 wt%. Most preferably the granular savoury food concentrate of the present invention is substantially free from maltodextrin.

The savoury food concentrate has a relatively low fat content. It is preferably produced by the process of wet-granulation. Some little amounts of fat may be present, e.g. for reasons of taste. Hence, preferably, the present invention preferably relates to a savoury food concentrate comprising less than 5 wt% of fat, more preferably less than 2 wt%, even more preferably less than 1 wt% of fat, and can comprise from 0 wt.% to 5 wt% of fat (including the possibility of the absence of fat), more preferably from 0.1 wt.% to 2 wt% of fat, most preferably from 0.5 wt.% to 1 wt% of fat. Preferably the savoury food concentrate of the present invention is substantially free from fat, more preferably, does not contain any added fat. Fat should be interpreted here as an added ingredient as such, and not as part of another ingredient, such as e.g. fat present in spices. Fat may be interpreted here as fat which is liquid at room temperature, such as e.g. one of the group consisting of sunflower oil, olive oil, rape seed oil, cotton seed oil, peanut oil and mixtures thereof. These fats may be preferred for reasons of health. But also fats which are solid at room temperature can be preferred, such as e.g. one of the group consisting of sunflower oil, olive oil, rape seed oil, cotton seed oil, peanut oil in (partly) hydrogenated form, animal fats such as one of the group consisting of chicken fat, pork fat, lamb fat, beef fat and mixtures thereof.

Preferably, the granular savoury food concentrate of the present invention further comprises one of the group of spices, (freeze) dried herbs, flavours, dried vegetables, meat powders, meat extracts and mixtures thereof. Preferably said herbs and vegetables are milled. Preferably these are present in an amount of from 0.5 wt.% to 10 wt.%, preferably in an amount of from 3 wt.% to 8 wt.%, most preferably in an amount of from 5 wt.% to 7 wt%.

The water activity Aw of the final granular savoury food concentrate is preferably lower than 0.87, more preferably of between 0.1 and 0.5. Most preferably between 0.2 and 0.3.

The invention further relates to a food product comprising the food concentrate of the present invention. Such a food product may be a dry, concentrated mixture for preparing one of the group of a soup, a sauce, a gravy and a seasoning. The amount of the granular savoury food concentrate of the present invention which is present in the food product may be from 5 wt.% to 99 wt%, preferably from 10 wt.% to 80 wt.%, more preferably from 25 wt.% to 60 wt.%, most preferably from 30 wt.% to 50 wt.%.

In a further aspect the present invention relates to a process to produce a granular savoury food concentrate, comprising the steps of:
a) preparing a mixture comprising, based on the dry weight of the granular savoury food concentrate:
   - from 10 wt.% to 65 wt.% of salt
   - from 10 wt.% to 50 wt.% of a binder selected from the group consisting of flour, starch and a mixture thereof,
b) mixing water into the mixture resulting from step a),
c) mixing from 1 wt% to 20 wt% of yeast extract into the mixture resulting from step a) or from step b), based on the dry weight of the granular savoury food concentrate,
d) shaping the resulting mixture comprising salt, binder, yeast extract and water to granules by wet-granulation,
e) drying the granules resulting from step d) to form a granular savoury food concentrate.

In step a) a mixture is prepared comprising the salt and the starch. The preferred amounts of all ingredients is mentioned above where the granular food concentrate has been described.

In step b) water is added. Water is added in an amount of from 0.1 to 10 wt%, preferably in an amount of from 1 to 8 wt%, more preferably in an amount of from 2 to 5 wt% based on the weight of the total ingredients mixture to be shaped to granules, comprising salt, at least one of flour and starch, and water.

The water can be added by pouring it in the ingredient mixture. Preferably, the water is added by atomizing it on the ingredient mixture.

The yeast extract is mixed into the ingredients mixture in step c). Yeast extract is a powder in the present invention. The amount of from 1 to 20 wt% is based on the dry weight of the total ingredients mixture, i.e. excluding the weight of the water that is included in step b). The addition of the yeast extract can be done before addition of the water. In this case, step c) may be conducted before or simultaneously with step b). Yeast extract may then be mixed in together with the salt and the starch. Preferably, the yeast extract is added after addition of the water. It is optimal if first the other ingredients are hydrated with water, before adding yeast extract. Preferably, the invention relates to a process, wherein the yeast extract is mixed in after mixing of the water into the mixture resulting from step a).

Preferably, the temperature of the mixture after mixing all ingredients is between 22°C and 50 °C, preferably between 30°C and 45°C, most preferably between 35°C and 40°C. This temperature results in optimal granulation and product integrity.

After mixing the mixture comprising salt, starch, water and yeast extract, the mixture is shaped into granules in step d). Shaping is done by using a wet-granulation technique. The skilled man is aware of the technique of wet-granulation. During wet-granulation, ingredients are partly dissolved in the added water. The resulting moisty mixture is shaped by pressing it through a sieve, and the resulting granules are dried. Wet granulation can be achieved by shear granulators, high speed mixer granulators, extruders or fluidized bed granulators. Preferably an extrusion process is used. Preferably the invention relates to a process, wherein the shaping in step b) is conducted by a low pressure radial extrusion system such as a basket extruder of. During drying, the partly dissolved ingredients re-crystallize, in this way resulting in binding of the ingredients and therefore coherency and texture of the granule. Drying is conducted in step e) of the process.

After granulation, the resulting granules may have the shape of small sticks. Preferably, the process of the present invention further comprises an optional milling step f). Preferably, the milling step f) is conducted after drying step e). Drying is preferably done up to a water activity (Aw) of lower than 0.87, preferably of between 0.2 and 0.5, most preferably of between 0.2 and 0.3. Preferably, the drying step e) is conducted at a temperature of from 50°C to 160 °C, preferably of from 60°C to 130°C most preferably between 70°C and 100°C.

The granular savoury food concentrate according to the invention is preferably packaged. Hence the invention relates to a process according to the invention, wherein the process further comprises a step of packaging the resulting granular savoury food concentrate in a packaging selected from the group consisting of: a jar, a dispenser, a mill, a sachet, a pouch and a container.

The granules of the present invention are preferably used in savoury applications. In a further aspect, the present invention relates to the use of the granular savoury food concentrate of the present invention for the preparation of at least one of the group consisting of: a bouillon, soup, sauce, and a gravy. To this end, the granular savoury food concentrate is diluted in an aqueous solution, preferably hot water. The hygroscopic nature might contribute to a relatively fast dissolution. The invention further relates to the use of a food concentrate of the invention as a seasoning. The granules of the invention may be sprinkled or poured on a dish or a meal during cooking or before or during consumption.

The granular savoury food concentrate of the present invention is exemplified below in the following, non-limiting, examples.

### Example 1

A mixture of ingredients was prepared comprising in wt%: salt (NaCl), starch (potato), MSG, sugar, yeast extract (YE) and water in the amounts indicated in Table 1. Water is not calculated in the 100% dry mix, the dry ingredients add up to 100%wt.

**Table 1.**

| Batch | salt | starch | MSG | Sugar | YE | water | Result | Score |
|---|---|---|---|---|---|---|---|---|
| 1 | 50 | 10 | 40 | 0 | 0 | 9 | Control: conventional granule. Good granulation. | + |
| 2 | 40 | 5 | 40 | 10 | 5 | 1.5 | Comparative Example. Granules can be produced, very high resistance in machine (high torque). 5% starch too low. | +/- |
| 3 | 50 | 30 | 0 | 0 | 20 | 3.5 | Granules can be produced. Very high resistance, amount of YE approaches limit. | +/- |
| 4 | 50 | 33 | 0 | 0 | 17 | 4.5 | Good granulation. | + |
| 5 | 20 | 40 | 0 | 0 | 40 | 5 | Comparative example. No good granulation, high torque. | - |

Ingredients mentioned in table 1 were added into a mixer (lödige, plough shear). The mix, except for the YE, was premixed for 1 minute to allow dispersion of the raw materials. Then the water was sprayed into the mixer. Then YE was mixed in. Mixing continued until a end temperature of 38°C was reached. The mix was collected in a bin and transferred to a granulation machine (basket extruder) and granulated.

Afterwards granules were dried at 80°C

When the amount of YE rises higher than 20 wt% (batch 3 and 5), the resistance in the machine lead to unfavorable granulation results.

Amounts of starch lower than 10wt%, may result in unfavourable granulation results, as the basket extruder may block (batch 2). Good results were observed in batch 4, where the amount of YE was 17 wt%.

### Example 2

A composition was made as indicated in the table 2.

Amounts are indicated as wt% on dry mix.

**Table 2.**

| Batch | Salt | Malto dextrin | starch | sugar | YE | Flavours and spices | Water | Result |
|---|---|---|---|---|---|---|---|---|
| 1 | 47 | 0 | 18 | 8 | 11 | 16 | 3.6 | Acceptable granulation |
| 2 | 40 | 0 | 30 | 7 | 10 | 13 | 5.0 | Good granulation |
| 3 | 51.5 | 0 | 10 | 9 | 12.5 | 17 | 3.6 | Bad granulation |
| 4 | 44 | 0 | 23 | 7.5 | 11 | 14.5 | 4.6 | Good granulation |
| 5 | 40 | 11 | 20 | 6.5 | 9.5 | 13.5 | 3.8 | Bad granulation |
| 6 | 42 | 0 | 27 | 7 | 10 | 14 | 5.1 | Good granulation |

The process was used as decribed for Example 1. In this experiment variable amounts of yeast extract and starch have been used with a constant amount of salt and yeast extract. With an amount of yeast extract of 11 wt%, 18wt% of starch resulted in an acceptable granulation process (batch 1), whereas lower amounts of starch (batch 3) resulted in less optimal results and higher amounts (batch 2 and 4) resulted in better results. Addition of maltodextrin showed adverse effects (batch 5). The use of flour in stead of starch resulted in results comparable to that of starch (not shown), indicating that both starch and flour can be used. The granules can be dissolved in water and provide a bouillon flavouring comparable to granules that comprise MSG.

## Claims

1. A granular savoury food concentrate comprising, based on the dry weight of the granular savoury food concentrate:
- from 10 wt.% to 65 wt.% of salt,
- from 1 wt.% to 20 wt.% of yeast extract,
- from 15 wt.% to 50 wt.% of a binder selected from the group consisting of flour, starch and a mixture thereof, wherein starch is native starch or physically modified starch,
wherein the granular food concentrate is not in a glassy state.

2. Food concentrate according to claim 1, comprising less than 2 wt.% of fat.

3. Food concentrate according to any one of the preceding claims, comprising less than 40 wt.%, preferably less than 20 wt%, more preferably less than 10 wt%, even more preferably less than 5 wt% of monosodium glutamate.

4. Food concentrate according to claim 3, comprising from 1 wt% to 5 wt% of monosodium glutamate.

5. Food concentrate according to claim 3, wherein the food concentrate does not contain monosodium glutamate.

6. Food concentrate according to any one of the preceding claims, further comprising from 1 wt% to 15 wt.% of sugar.

7. Food concentrate according to any of the preceding claims, wherein the starch is potato starch.

8. Food product comprising the food concentrate of any of claims 1 to 7.

9. A process to produce a granular savoury food concentrate according to anyone of claim 1 to 7, which is not in a glassy state, comprising the steps of;
a) preparing a mixture comprising, based on the dry weight of the granular savoury food concentrate:
- from 10 wt.% to 65 wt.% of salt
- from 15 wt.% to 50 wt.% of a binder selected from the group consisting of flour, starch and a mixture thereof, wherein starch is native starch or physically modified starch
b) mixing water into the mixture resulting from step a),
c) mixing from 1 wt% to 20 wt% of yeast extract into the mixture resulting from step a) or from step b), based on the dry weight of the granular savoury food concentrate,
d) shaping the resulting mixture comprising salt, binder, yeast extract and water to granules by wet-granulation,
e) drying the granules resulting from step d) to form a granular savoury food concentrate.

10. Process according to claim 9, wherein the yeast extract is mixed in after mixing of the water into the mixture resulting from step a).

11. Process according to any one of claims 9 or 10, wherein drying step e) is conducted at a temperature of from 50°C to 160 °C.

12. Process according to any one of claims 9 to 11. wherein the drying step e) is conducted up to a water activity (Aw) of lower than 0.87.

13. Process according to any one of claims 9 to 12, wherein the process further comprises a step of packaging the resulting granular savoury food concentrate in a packaging selected from the group consisting of: a jar, a dispenser, a mill, a sachet, a pouch and a container.

14. Use of a food concentrate according to any of claims 1 to 7 for the preparation of at least one of the group consisting of: a bouillon, soup, sauce, and a gravy.

15. Use of a food concentrate according to any of claims 1 to 7 as a seasoning.

## Patentansprüche

1. Körniges, pikantes Lebensmittelkonzentrat, das auf das Trockengewicht des körnigen pikanten Lebensmittelkonzentrats bezogen Folgendes aufweist:
- 10 bis 65 Gew.-% Salz,
- 1 bis 20 Gew.-% Hefeextrakt,
- 15 bis 50 Gew.-% eines Bindemittels, das aus der Gruppe ausgewählt ist, die aus Mehl, Stärke und einem Gemisch davon besteht, wobei die Stärke natürliche Stärke oder physikalisch modifizierte Stärke ist,
wobei sich das körnige Lebensmittelkonzentrat nicht in einem glasartigen Zustand befindet.

2. Lebensmittelkonzentrat nach Anspruch 1,
das weniger als 2 Gew.-% Fett aufweist.

3. Lebensmittelkonzentrat nach einem der vorstehenden Ansprüche,
das weniger als 40 Gew.-%, vorzugsweise weniger als 20 Gew.-%, stärker bevorzugt weniger als 10 Gew.-%, noch stärker bevorzugt weniger als 5 Gew.-% Mononatriumglutamat aufweist.

4. Lebensmittelkonzentrat nach Anspruch 3,
das 1 bis 5 Gew.-% Mononatriumglutamat aufweist.

5. Lebensmittelkonzentrat nach Anspruch 3,
wobei das Lebensmittelkonzentrat kein Mononatriumglutamat enthält.

6. Lebensmittelkonzentrat nach einem der vorstehenden Ansprüche,
das ferner 1 bis 15 Gew.-% Zucker aufweist.

7. Lebensmittelkonzentrat nach einem der der vorstehenden Ansprüche,
wobei die Stärke Kartoffelstärke ist.

8. Lebensmittelprodukt, das das Lebensmittelkonzentrat nach einem der Ansprüche 1 bis 7 aufweist.

9. Verfahren zum Herstellen eines körnigen, pikanten Lebensmittelkonzentrats nach einem der Ansprüche 1 bis 7, das sich nicht in einem glasartigen Zustand befindet, das die folgenden Schritte aufweist:
a) Herstellen eines Gemischs, das auf das Trockengewicht des körnigen, pikanten Lebensmittelkonzentrats bezogen Folgendes aufweist:
- 10 bis 65 Gew.-% Salz,
- 15 bis 50 Gew.-% eines Bindemittels, das aus der Gruppe ausgewählt ist, die aus Mehl, Stärke und einem Gemisch davon besteht, wobei die Stärke natürliche Stärke oder physikalisch modifizierte Stärke ist,
b) Mischen von Wasser in das vom Schritt a) resultierende Gemisch,
c) Mischen von 1 bis 20 Gew.-% Hefeextrakt in das vom Schritt a) oder vom Schritt b) resultierende Gemisch, und zwar auf das Trockengewicht des körnigen, pikanten Lebensmittelkonzentrats bezogen,
d) Formen des entstandenen Gemischs, das Salz, Bindemittel, Hefeextrakt und Wasser aufweist, durch Nassgranulieren zu Granulat,
e) Trocknen des vom Schritt d) resultierenden Granulats, um ein körniges, pikantes Lebensmittelkonzentrat zu erzeugen.

10. Verfahren nach Anspruch 9,
wobei der Hefeextrakt nach dem Mischen von Wasser in das vom Schritt a) resultierende Gemisch eingemischt wird.

11. Verfahren nach einem der Ansprüche 9 oder 10,
wobei der Trocknungsschritt e) bei einer Temperatur von 50 bis 160 °C erfolgt.

12. Verfahren nach einem der Ansprüche 9 bis 11,
wobei der Trocknungsschritt e) bis zu einer Wasseraktivität (Aw) von weniger als 0,87 erfolgt.

13. Verfahren nach einem der Ansprüche 9 bis 12,
wobei das Verfahren ferner einen Schritt des Verpackens des resultierenden körnigen, pikanten Lebensmittelkonzentrats in einer Verpackung aufweist, die aus der Gruppe ausgewählt ist, die aus einem Gefäß, einem Spender, einer Mühle, einem Säckchen, einem Beutel und einem Container besteht.

14. Verwendung eines Lebensmittelkonzentrats nach einem der Ansprüche 1 bis 7 für die Herstellung von zumindest einem Produkt aus der Gruppe, die aus einer Bouillon, einer Suppe, einer Soße und einer Bratensoße besteht.

15. Verwendung eines Lebensmittelkonzentrats nach einem der Ansprüche 1 bis 7 als Würze.

## Revendications

1. Concentré alimentaire goûteux granulaire comprenant, sur la base du poids sec du concentré alimentaire goûteux granulaire :
- de 10 % en poids à 65 % en poids de sel,
- de 1 % en poids à 20 % en poids d'extrait de levure,
- de 15 % en poids à 50 % en poids d'un liant choisi dans le groupe consistant en la farine, l'amidon et un mélange de ceux-ci, dans lequel l'amidon est de l'amidon natif ou un amidon modifié physiquement,
dans lequel le concentré alimentaire granulaire n'est pas à l'état vitreux.

2. Concentré alimentaire selon la revendication 1, comprenant moins de 2 % en poids de matière grasse.

3. Concentré alimentaire selon l'une quelconque des revendications précédentes, comprenant moins de 40 % en poids, de préférence moins de 20 % en poids, de manière davantage préférée moins de 10 % en poids, de manière encore davantage préférée moins de 5 % en poids de glutamate monosodique.

4. Concentré alimentaire selon la revendication 3, comprenant de 1 % en poids à 5 % en poids de glutamate monosodique.

5. Concentré alimentaire selon la revendication 3, dans lequel le concentré alimentaire ne contient pas de glutamate monosodique.

6. Concentré alimentaire selon l'une quelconque des revendications précédentes, comprenant en outre de 1 % en poids à 15 % en poids de sucre.

7. Concentré alimentaire selon l'une quelconque des revendications précédentes, dans lequel l'amidon est l'amidon de pomme de terre.

8. Produit alimentaire comprenant le concentré alimentaire selon l'une quelconque des revendications 1 à 7.

9. Procédé pour produire un concentré alimentaire goûteux granulaire selon l'une quelconque des revendications 1 à 7, qui n'est pas à l'état vitreux, comprenant les étapes de :
a) préparation d'un mélange comprenant, sur la base du poids sec du concentré alimentaire goûteux granulaire :
- de 10 % en poids à 65 % en poids de sel
- de 15 % en poids à 50 % en poids d'un liant choisi dans le groupe consistant en la farine, de l'amidon et un mélange de ceux-ci, dans lequel l'amidon est un amidon natif ou un amidon modifié physiquement
b) le mélange d'eau dans le mélange résultant de l'étape a),
c) le mélange de 1 % en poids à 20 % en poids d'extrait de levure dans le mélange résultant de l'étape a) ou de l'étape b), sur la base du poids sec du concentré alimentaire goûteux granulaire,
d) le façonnage du mélange obtenu comprenant du sel, un liant, un extrait de levure et de l'eau en granulés par granulation à l'état humide,
e) le séchage des granulés résultant de l'étape d) pour former un concentré alimentaire goûteux granulaire.

10. Procédé selon la revendication 9, dans lequel l'extrait de levure est mélangé après le mélange de l'eau, au mélange résultant de l'étape a).

11. Procédé selon l'une quelconque des revendications 9 ou 10, dans lequel l'étape de séchage e) est réalisée à une température de 50 °C à 160 °C.

12. Procédé selon l'une quelconque des revendications 9 à 11, dans lequel l'étape de séchage e) est réalisée jusqu'à une activité de l'eau (Aw) inférieure à 0,87.

13. Procédé selon l'une quelconque des revendications 9 à 12, dans lequel le procédé comprend en outre une étape de conditionnement du concentré alimentaire goûteux granulaire obtenu dans un emballage choisi dans le groupe comprenant un pot, un distributeur, un moulin, un sachet, une poche et un conteneur.

14. Utilisation d'un concentré alimentaire selon l'une quelconque des revendications 1 à 7, pour la préparation d'au moins un élément du groupe comprenant :
un bouillon, une soupe, une sauce et un jus de viande.

15. Utilisation d'un concentré alimentaire selon l'une quelconque des revendications 1 à 7 comme assaisonnement.
